# EUROPÄISCHE PATENTSCHRIFT

(11) **EP 1 642 850 B1**
(45) Veröffentlichungstag und Bekanntmachung des Hinweises auf die Patenterteilung: **05.03.2008**
(21) Anmeldenummer: 05108897.9
(22) Anmeldetag: 04.10.2003
(51) Int. Cl.: B65G 1/04, B65G 47/91

(54) **Regallager mit Manipulator mit Sauggreifer**
Shelf storage with manipulator with suction gripper
Magasin à rayonnage avec manipulateur avec tête de préhension par dépression

(30) Priorität: 09.10.2002 DE 20215479 U
(43) Veröffentlichungstag der Anmeldung: 05.04.2006
(62) Teilanmeldung aus: 03022344.0
(73) Patentinhaber: GEBR. WILLACH GmbH, 53809 Ruppichteroth (DE)
(72) Erfinder: Willach, Ulrich, 53819 Neunkirchen-Seelscheid (DE); Schmitt, Werner, 53809 Ruppichteroth-Schönenberg (DE); Schumacher, Heribert, 53809 Ruppichteroth-Harth (DE)
(74) Vertreter: Selting, Günther

(56) Entgegenhaltungen:
- CH-A- 680 212
- US-A- 3 820 667
- US-A- 4 789 295

## Beschreibung

Die Erfindung betrifft ein Regallager mit Regalen, die Regalfächer enthalten, und einen Manipulator, der einen vor einem Regalfach positionierbaren Warenträger und einen die Waren auf den Warenträger ziehenden Sauggreifer aufweist, (siehe z.B. US-A-3 820 667).

Bei einem derartigen Regallager besteht die Schwierigkeit, die Ware mit hinreichender Sicherheit und Genauigkeit zu ergreifen, um sicherzustellen, dass sie aus dem Regalfach auf den Warenträger gelangt und auch von diesem nicht herabfällt.

Der Erfindung liegt die Aufgabe zugrunde, bei einem Regallager die Sicherheit der Warenentnahme durch den Sauggreifer mit einfachen Mitteln zu erhöhen.

Die Lösung dieser Aufgabe erfolgt erfindungsgemäß mit den Merkmalen des Anspruchs 1. Hiernach ist entlang eines den Warenträger tragenden Balkens ein den Sauggreifer tragender Mitnehmer bewegbar. Ein Sensor stellt fest, wann der Sauggreifer die Ware gegen einen Widerstand im Regalfach drückt, und er leitet dann die Rückwärtsbewegung des Mitnehmers ein.

Der Widerstand im Regalfach ist vorzugsweise die Rückwand dieses Fachs, jedoch kann es sich auch um einen Einbau oder eine andere Ware handeln. In jedem Fall schiebt der Mitnehmer zunächst den Sauggreifer so weit vor, bis die Ware gegen einen Widerstand stößt. Der Sauggreifer hat somit die Möglichkeit, fest an der Ware anzugreifen, um ein ordnungsgemäßes Festsaugen sicherzustellen. Erst wenn das Erreichen des Widerstandes festgestellt ist, wird die Rückwärtsbewegung des Mitnehmers eingeleitet. Auf diese Weise wird eine vorzeitige Rückzugsbewegung, bei der ein sicheres Festsaugen nicht gewährleistet wäre, vermieden.

Weitere Ausgestaltungen und Weiterbildungen der vorliegenden Erfindung sind den Ansprüchen 2 - 5 zu entnehmen.

Im Folgenden wird unter Bezugnahme der Zeichnungen ein Ausführungsbeispiel der Erfindung näher erläutert.

Es zeigen:
- Fig. 1:: eine schematische Stirnansicht des Regallagers mit Blickrichtung in den Gang hinein,
- Fig. 2:: eine schematische Draufsicht des Regallagers,

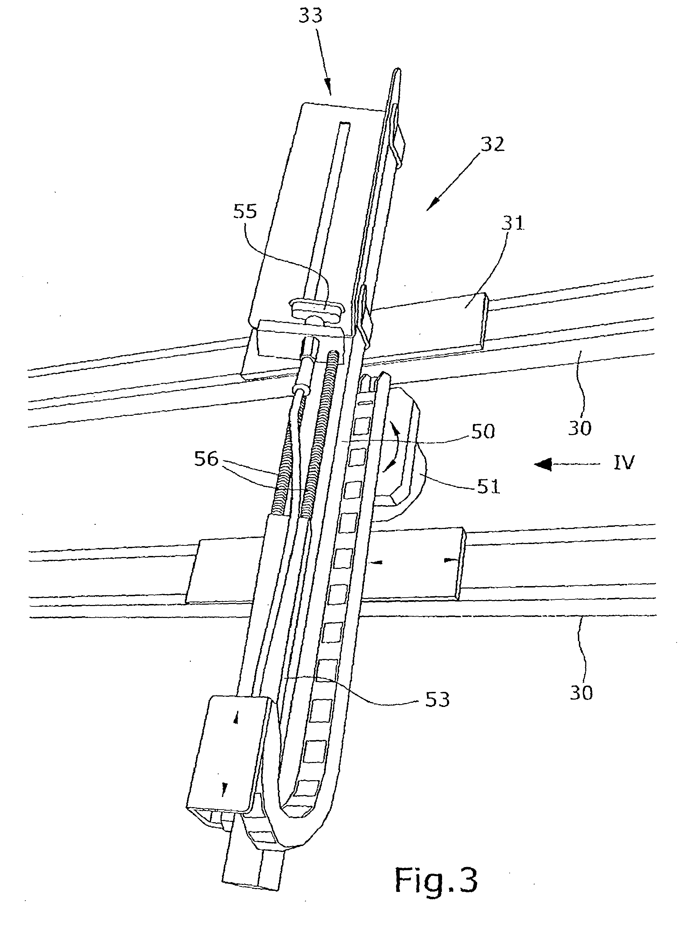

- Fig. 3:: eine perspektivische Darstellung des Manipulators aus Richtung des Pfeils III von Figur 1,
- Fig. 4:: eine Seitenansicht des Manipulators aus Richtung des Pfeils IV von Figur 3 in der Grundstellung,
- Fig. 5:: den Manipulator, der in ein Regalfach hineinfährt,
- Fig. 6:: das Ergreifen der Ware durch den Sauggreifer nach dem Vorschieben gegen die Rückwand des Regalfachs, und
- Fig. 7:: das Herausziehen der Ware auf den Warenträger durch den Sauggreifer.

Das Regallager, das im vorliegenden Fall ein Apothekenlager ist, weist ein Traggestell 10 auf, in dem sämtliche Komponenten angeordnet sind. In dem Traggestell 10 befinden sich Ziehregale 11, die auf Rollen 12 in Führungsschienen 13 verfahrbar sind. Zu beiden Seiten eines Ganges 14 ist jeweils eine Reihe von Ziehregalen vorhanden. Jedes dieser Ziehregale 11 kann aus seiner Reihe heraus in den Gang 14 hineingezogen werden. Zu den Einzelheiten des Aufbaus des Ziehregallagers wird auf EP 0 734 975 B1 verwiesen.

Die Ziehregale 11 enthalten im vorliegenden Fall Regalfächer 15, die nicht durch Querwände gegeneinander abgegrenzt sind. Jedes Regalfach 15 weist einen schrägen Boden 16 und eine rechtwinklig hierzu verlaufende Seitenwand 17 auf, so dass die Ware 18 in definierter Form in dem gebildeten Winkel aufgenommen wird, wobei die größte Ware mit 18 und die kleinste Ware mit 18a bezeichnet ist. Das Ziehregal 11 hat also sägezahnförmige Regalböden.

In Längsrichtung des Ganges 14 ist die Transportvorrichtung 20 verfahrbar. Diese weist einen Transportschlitten 21 auf, der an Schienen 22 des Traggestells 10 geführt und oberhalb der Ziehregale 11 angeordnet ist. Über dem Transportschlitten 21 verläuft eine am Traggestell 10 befestigte Führungsschiene 23, an deren entgegengesetzten Außenseiten Führungsroi!en 24 des Transportschlittens 21 angreifen, um eine Seitenführung des Transportschlittens 21 zu bewirken.

Von dem Transportschlitten 21 ragt eine Vertikalführung 25 nach unten. Diese besteht aus einem Paar paralleler linker Säulen 26 und einem Paar paralleler rechter Säulen 27. Die Säulen jedes Paares sind in Längsrichtung des Ganges hintereinander angeordnet. Die Säulen 26 und 27 sind an ihren unteren Enden durch eine Querstrebe 28 verbunden. Die Vertikalführung 25 bildet einen in sich starren Rahmen, der nur am oberen Ende aufgehängt ist, während das untere Ende keine Führungen aufweist, die mit den Führungen der Ziehregale 11 kollidieren würden.

Zwischen den Säulen 26 und 27 erstreckt sich ein Vertikalschlitten 30, der in vertikaler Richtung gesteuert verfahrbar ist. Der Antrieb des Vertikalschlittens 30 erfolgt durch (nicht dargestellte) Spindeln, die in oder neben den Säulen 26,27 angeordnet sind und synchron angetrieben werden. Die Säulen 26 und 27 befinden sich unmittelbar angrenzend an die Reihe von Ziehregalen, also an den äußersten Enden der Breite des Ganges 14. Wenn der Vertikalschlitten 30 in seine oberste Position gefahren wird, ist der Gang 14 zwischen den Säulen 26 und 27 als Durchgang für Personen frei.

Der Vertikalschlitten 30 bildet eine Führung für einen Horizontalschlitten 31, der quer zum Gang 14 auf dem Vertikalschlitten 30 verfahrbar ist. Der Horizontalschlitten 31 trägt einen Manipulator 32, der einen in Längsrichtung des Ganges ausgerichteten Warenträger 33 enthält.

Beim Betrieb wird der Horizontalschlitten 31 in eine bestimmte Horizontalposition gefahren, die der vertikalen Zielebene entspricht. Das Ziehregal 11 wird so weit in den Gang hinein gefahren, dass das anzusteuernde Regalfach 15 sich ebenfalls in der vertikalen Zielebene im Gang befindet. Der Vertikalschlitten 30 wird vertikal verfahren, bis der Warenträger 33 die Höhe des Regalfachs 15 erreicht hat.

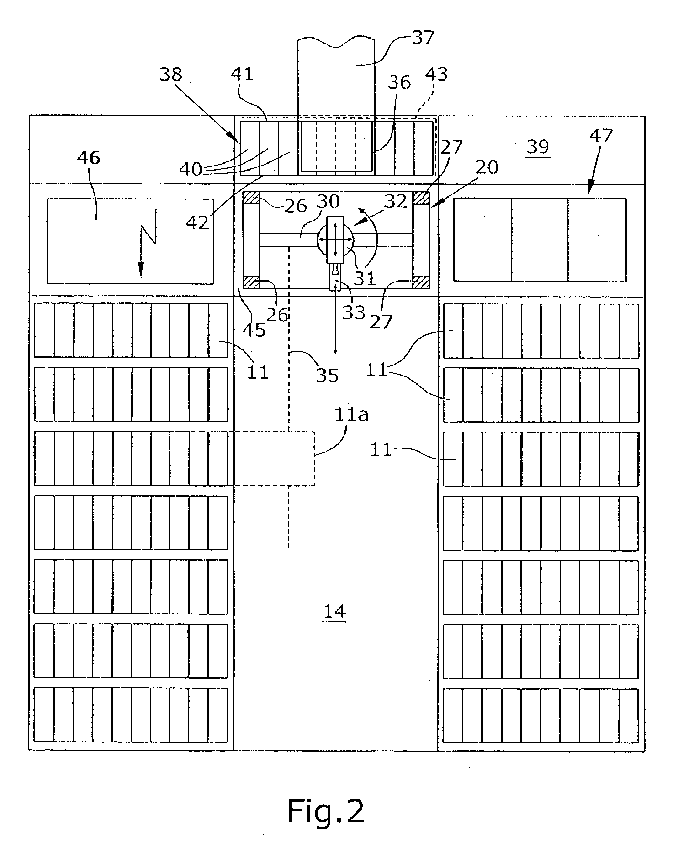

In Figur 2 ist die vertikale Zielebene 35 dargestellt, in die der Manipulator 32 auf dem Vertikalschlitten 30 verfahren wird. Das Ziehregal 11a, auf das zugegriffen werden soll, ist so weit herausgezogen, dass das betreffende Regalfach sich in der Zielebene 35 befindet. Der Warenträger 33 übernimmt die Ware in noch zu erläuternder Weise aus dem Regalfach. Dann fährt der Manipulator eine Aufnahmevorrichtung 36 an, an die die Ware übergeben wird. Von der Aufnahmevorrichtung 36 wird die Ware durch ein Transportband 37 abgeführt.

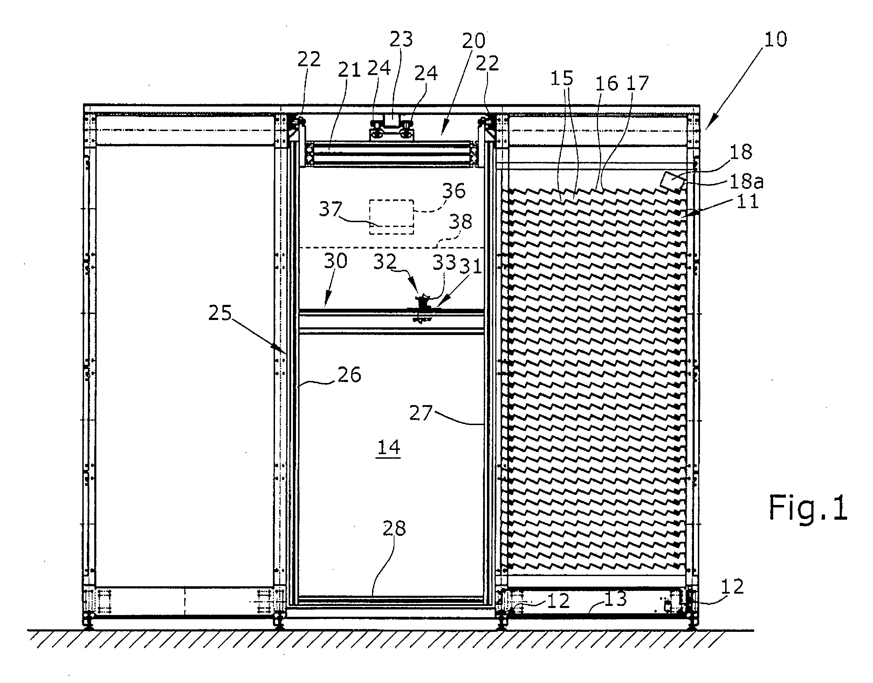

Gemäß Figuren 1 und 2 befindet sich die Aufnahmevorrichtung 36 über einem Warenübergaberegal 38, das in einer Verlängerung des Ganges 14 angeordnet ist und seitlich in eine Abstellposition 39 verfahren werden kann, in der es die Verlängerung des Ganges freigibt. In Figur 2 ist die Transportvorrichtung 20 in der Übergabeposition dargestellt, in der der Manipulator 32 die Aufnahmevorrichtung 36 erreichen kann, um die Ware an diese zu übergeben. Diese Übergabeposition befindet sich zwischen dem Ende des Ganges 14 und dem Warenübergaberegal 38. In der Übergabeposition kann der Manipulator 32 auch auf die einzelnen Fächer 40 des Warenübergaberegals 38 zugreifen. Das Warenübergaberegal 38 hat eine Eingabeseite 41, an der Waren manuell eingeführt werden können, und eine Ausgabeseite 42, in die der Manipulator 32 gesteuert eingreifen kann.

Das Warenübergaberegal 38 ist mit einer Jalousie 43 versehen, die horizontal verschoben werden kann und so geführt ist, dass sie entweder die Eingabeseite 41 oder die Ausgabeseite 42 verschließt. Somit ist ein direkter Durchgriff durch ein Regalfach 40 nicht möglich. Es wird insbesondere verhindert, dass eine Person, die mit einer Hand in die Eingabeseite 41 eingreift, durch den Manipulator verletzt wird.

Seitlich neben der Übergabeposition 45 der Transportvorrichtung 20 befindet sich in Verlängerung einer Ziehregalreihe ein Schaltschrank 46 und in Verlängerung einer anderen Ziehregalreihe ein Lagerraum 47 für Waren, die noch eingegeben werden müssen oder aussortiert wurden.

Bei Benutzung des Warenübergaberegals 38 werden Waren in definierte Regalfächer 40 manuell eingelegt. Der Manipulator 32 fährt das betreffende Regalfach an, übernimmt die Ware aus diesem und führt sie in das Regalfach eines Ziehregals ein. Sämtliche Vorgänge werden gesteuert ausgeführt und gespeichert. Der Lagercomputer weiß dann, in weichem Regalfach welches Ziehregals sich eine bestimmte Ware befindet.

Im Störungsfall können aus dem Lager Waren manuell entnommen werden. Das Warenübergaberegal 38 wird in die Abstellposition 39 geschoben, so dass durch die Transportvorrichtung 20 hindurch der Weg in den Gang 14 frei ist. Die Transportvorrichtung 20 kann manuell verschoben werden. Auch der Vertikalschlitten 30 kann manuell hochgekurbelt werden. Das betreffende Ziehregal 11 kann manuell herausgezogen werden und die Ware kann aus ihm entnommen werden. Bei neuerlicher Inbetriebnahme des Automatikbetriebes fahren sämtliche Komponenten in eine definierte Ausgangslage zurück, bevor der erste Auftrag ausgeführt wird.

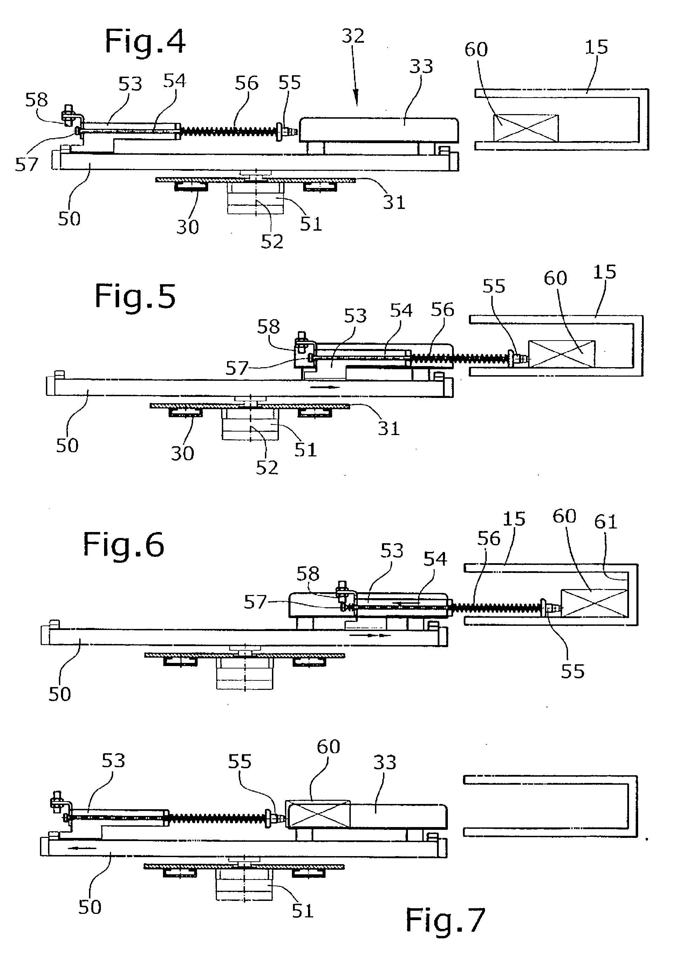

In den Figuren 4 - 7 ist die Funktion des Manipulators 32 dargestellt. Auf dem Horizontalschlitten 31, der auf dem Vertikalschlitten 30 horizontal gesteuert verfahrbar ist, befindet sich ein horizontaler Balken 50 als Basisteil des Manipulators. Der Balken 50 ist durch einen Drehantrieb 51 relativ zu dem Horizontalschlitten 31 um eine vertikale Achse 52 schwenkbar, so dass er die in den Zeichnungen dargestellte Zugriffsposition einnehmen kann, in der er auf das Regalfach 15 gerichtet ist, oder eine Abgabeposition, in der er um 180° gedreht ist und in der der Warenträger 33 von dem Regalfach 15 wegweist. Der Warenträger 33 ist auf dem Balken 50 fest angebracht. Er besteht aus einem winkelförmigen Blech, das entsprechend der Form des Regalfachs 15 gestaltet ist und vor diesem Regalfach positioniert werden kann. Auf dem Balken 50 ist ein Mitnehmer 53 in Längsrichtung verfahrbar. Der Balken ist hierzu als kolbenloser Pneumatikzylinder ausgebildet, um den Mitnehmer 53 zu bewegen. Der Mitnehmer 53 trägt eine Stangenvorrichtung 54 aus zwei parallelen Stangen, die in dem Mitnehmer verschiebbar sind. An den vorderen Enden der Stangen ist mindestens ein Sauggreifer 55 befestigt. Eine Federvorrichtung 56 treibt den Sauggreifer 55 mit der Stange 54 in die vordere Endstellung. Diese ist dadurch begrenzt, dass ein Anschlagteil 57 am rückwärtigen Ende der Stangenvorrichtung 54 gegen den Mitnehmer 53 stößt. Das Anschlagteil 57 bildet zugleich ein Markierungsteil für einen an dem Mitnehmer 53 befestigten Sensor 58. Dieser stellt fest, wenn das Anschlagteil 57 seine vordere Endstellung verlässt und zurückbewegt wird.

In der in Figur 4 dargestellten Grundstellung befindet sich der Mitnehmer 53 in der Rückzugsposition und die Stangenvorrichtung 54 mit dem Sauggreifer 55 ist aus dem Mitnehmer durch die Federvorrichtung 56 herausgedrückt. Der Warenträger 33 ist vor einem Regalfach 15, das eine Ware 60 enthält, positioniert.

Gemäß Figur 5 wird zum Zugreifen auf die Ware 60 der Mitnehmer 53 auf dem Balken 50 vorgeschoben, wobei der Sauggreifer 55 gegen die Ware 60 stößt und diese vor sich herschiebt, ohne dass die Federvorrichtung 56 zusammengedrückt wird.

Figur 6 zeigt den Zustand, dass die Ware 60 gegen ein Hindernis stößt, im vorliegenden Fall gegen die Rückwand 61 des Regalfachs 15. Dadurch wird die Stangenvorrichtung 54 relativ zu dem Mitnehmer 53 nach hinten verschoben und die Federvorrichtung 56 zusammengedrückt. Das Anschlagteil 57 am rückwärtigen Ende der Stangenvorrichtung 54 betätigt den Sensor 58. Daraufhin wird der Sauggreifer 55 eingeschaltet und dieser saugt sich an der Ware 60 fest. Dabei ist sichergestellt, dass ein gewisser mechanischer Anpressdruck durch die Federvorrichtung 56 herrscht, so dass der Sauggreifer 55 voll wirksam werden kann.

Schließlich wird gemäß Figur 7 der Mitnehmer 53 auf dem Balken 50 zurückgezogen, während der Sauggreifer 55 aktiviert bleibt. Dadurch wird die Ware 60 auf den Warenträger 33 gezogen. Nun wird der Horizontalschlitten 31 in die Mittenposition verfahren. Danach wird der Drehantrieb 51 betätigt, um den Balken 50 um 180° in die Abgabeposition zu schwenken. Der Vertikalschlitten 30 wird auf die Höhe der Aufnahmevorrichtung 36 hochgefahren und gleichzeitig wird der Horizontalschlitten 31 in die für die Warenabgabe erforderliche Querposition gefahren. Wenn die Aufnahmevorrichtung 36 erreicht ist, schiebt der Mitnehmer 53 die Ware 60 von dem Warenträger 33 herunter, ohne dass der Sauggreifer 55 aktiviert ist.

## Patentansprüche

1. Regallager mit Regalen, die Regalfächer (15) enthalten, und einem Manipulator (32), der einen vor einem Regalfach positionierbaren Warenträger (33) und einen die Waren (60) auf den Warenträger (33) ziehenden Sauggreifer (55) aufweist,
**dadurch gekennzeichnet,**
**dass** entlang eines den Warenträger (33) tragenden Balkens (50) ein den Sauggreifer (55) tragender Mitnehmer (53) bewegbar ist, und dass ein Sensor (58) vorgesehen ist, der feststellt, wenn der Sauggreifer (55) die Ware (60) gegen einen Widerstand im Regalfach (15) drückt und dann die Rückwärtsbewegung des Mitnehmers (53) einleitet, wodurch der eingeschaltete Sauggreifer (55) die Ware (60) aus dem Regalfach (15) auf den Warenträger (33) zieht.

2. Regallager nach Anspruch 1, **dadurch gekennzeichnet, dass** der Balken (50) an einem Horizontalschlitten (31) um eine vertikale Achse (52) schwenkbar ist.

3. Regallager nach Anspruch 1 oder 2, **dadurch gekennzeichnet, dass** der Warenträger (33) an dem Balken (50) starr befestigt ist.

4. Regallager nach einem der Ansprüche 1 - 3, **dadurch gekennzeichnet, dass** der Sauggreifer (55) an einer in Bezug auf den Mitnehmer (53) verschiebbaren, nach vorne vorgespannten Stangenvorrichtung (54) befestigt ist und dass der Sensor (58) eine Verschiebung der Stangenvorrichtung (54) in Bezug auf den Mitnehmer (53) feststellt.

5. Regallager nach einem der Ansprüche 1 - 4, **dadurch gekennzeichnet, dass** der Balken (50) auf einem Horizontalschlitten (31) angeordnet ist, der entlang eines Vertikalschlittens (30) quer zu einem Gang (14) gesteuert verfahrbar ist.

## Claims

1. A shelf storage comprising shelves with shelf trays (15) and a manipulator (32) comprising an article carrier (33) positionable in front of a shelf tray and a vacuum gripper (55) pulling the articles (60) on to the article carrier (33),
**characterized in that**
a tappet (53) supporting the vacuum gripper (55) is movable along a beam (50) supporting the article carrier (33), and that a sensor (58) is provided which detects if the vacuum gripper (55) pushes the article (60) against a resistance in the shelf tray (15) and then initiates a rearward movement of the tappet (53), whereby the activated vacuum gripper (55) pulls the article (60) from the tray shelf (15) onto the article carrier (33).

2. The shelf storage of claim 1 **characterized in that** the beam (50) is pivotable about a vertical axis (52) on a horizontal carriage (31).

3. The shelf storage of claim 1 or 2, **characterized in that** the article carrier (33) is rigidly fastened to the beam (50).

4. The shelf storage of one of claims 1-3, **characterized in that** the vacuum gripper (55) is fastened to a forward biased rod device (54) displaceable relative to the tappet (53), and that the sensor (58) detects a displacement of the rod device (54) relative to the tappet (53).

5. The shelf storage of one of claims 1-4, **characterized in that** the beam (50) is arranged on a horizontal carriage (31) which is displaceable, under control, transverse to an aisle along a vertical carriage (30).

## Revendications

1. Magasin comprenant des rayonnages contenant des compartiments de rayonnage (15), et un manipulateur (32) qui présente un porte-marchandises (33) pouvant être positionné devant un compartiment de rayonnage et une pince aspirante (55) déplaçant les marchandises (60) sur le porte-marchandises (33),
**caractérisé en ce qu'**
un entraîneur (53) portant la pince aspirante (55) est mobile le long d'une poutre (50) portant le porte-marchandises (33), et on prévoit un capteur (58) qui détermine le moment auquel la pince aspirante (55) pousse la marchandise (60) contre une résistance dans le compartiment de rayonnage (15) et initie ensuite le mouvement vers l'arrière de l'entraîneur (53), la pince aspirante (55) activée déplaçant ainsi la marchandise (60) hors du compartiment de rayonnage (15) sur le porte-marchandises (33).

2. Magasin selon la revendication 1, **caractérisé en ce que** la poutre (50) est pivotante au niveau d'un chariot horizontal (31) autour d'un axe vertical (52).

3. Magasin selon la revendication 1 ou 2, **caractérisé en ce que** le porte-marchandises (33) est fixé fixement à la poutre (50).

4. Magasin selon l'une des revendications 1 à 3, **caractérisé en ce que** la pince aspirante (55) est fixée à un dispositif à barres (54) précontraint vers l'avant, mobile par rapport à l'entraîneur (53), et le capteur (58) détermine un déplacement du dispositif à barres (54) par rapport à l'entraîneur (53).

5. Magasin selon l'une des revendications 1 à 4, **caractérisé en ce que** la poutre (50) est disposée sur un chariot horizontal (31) qui peut se déplacer de manière commandée le long d'un chariot vertical (30) transversalement à une allée de desserte (14).
